# EUROPEAN PATENT APPLICATION

(11) **EP 3 573 322 A1**
(43) Date of publication of application: **27.11.2019**
(21) Application number: 18173628.1
(22) Date of filing: 22.05.2018
(51) Int. Cl.: H04N 5/225, G03B 15/05, H04N 5/235, H05B 33/08

(54) **DRIVING AND CONTROLLING CIRCUIT, CAMERA MODULE AND MOBILE DEVICE**

(71) Applicant: Ams Sensors Asia Pte. Ltd., 569877 Singapore (SG)
(72) Inventor: Xu, Lu, San Pablo, CA California 94806 (US)
(74) Representative: Epping - Hermann - Fischer

(57) **Abstract**

A circuit for driving and controlling an optical emitter (OE, OE2) comprises an input (VIN) for receiving a supply voltage, an output (VO1, VO2) for connecting the optical emitter (OE, OE2), a single supercapacitor device (SC), and a control block (CTRL). The control block (CTRL) is configured to provide power from the supercapacitor device (SC) to the output (V01, VO2) depending on a first control signal (S1), and to charge the supercapacitor device (SC) from the supply voltage depending on a second control signal (S2).

## Description

The present invention relates to a circuit for driving and controlling an optical emitter, to a camera module comprising such a circuit and to a mobile device comprising such a circuit.

In various mobile applications optical emitters are used for illuminating the environment in some way. Such illumination applications usually do not take place continuously but for short time periods, during which sufficient current has to be provided by a driver circuit for operating the optical emitter.

In conventional approaches, such controller circuits include capacitor banks with a plurality of single capacitors connected in parallel in order to be able to store enough charge for providing the necessary current for the optical emitter. However, these capacitor banks need a non-negligible amount of space and therefore make it difficult to provide small packages that include the driver circuit and the capacitor bank.

An object to be achieved is to provide an improved concept for driving an optical emitter that overcomes the above-mentioned challenges.

This object is achieved with the subject-matter of the independent claims. Embodiments and developments are subject-matter of the dependent claims.

The improved concept is based on the idea that instead of using capacitor banks with a plurality of single capacitors as an energy storage for driving an optical emitter, a single supercapacitor device is used. The supercapacitor device may be implemented as an electric double layer capacitor, EDLC. The supercapacitor device has smaller dimensions compared to the plurality of capacitors in the capacitor bank and therefore allows a smaller package size for a driver circuit.

In one embodiment, a circuit for driving and controlling an optical emitter according to the improved concept comprises an input for receiving a supply voltage, an output for connecting the optical emitter, and the single supercapacitor device. A control block further comprised by the circuit is configured to provide power from the supercapacitor device to the output depending on a first control signal, and to charge the supercapacitor device from the supply voltage depending on a second control signal.

Accordingly, the control block controls both charging of the supercapacitor device by means of the supply voltage and discharging by providing power to the output or a connected optical emitter.

A supercapacitor, which is also known as an electric double-layer capacitor, EDLC, or supercap, ultracapacitor or Goldcap is a high-capacity capacitor with capacitance values much higher than other capacitors, but lower voltage limits, that bridge the gap between electrolytic capacitors and rechargeable batteries. They typically store 10 to 100 times more energy per unit volume or mass than electrolytic capacitors, can accept and deliver charge much faster than batteries, and tolerate many more charge and discharge cycles than rechargeable batteries.

Unlike ordinary capacitors, supercapacitors do not use the conventional solid dielectric, but rather, they may use electrostatic double-layer capacitance and electrochemical pseudocapacitance, both of which contribute to the total capacitance of the capacitor, with a few differences:
Electrostatic double-layer capacitors use carbon electrodes or derivatives with much higher electrostatic double-layer capacitance than electrochemical pseudocapacitance, achieving separation of charge in a Helmholtz double layer at the interface between the surface of a conductive electrode and an electrolyte. The separation of charge is of the order of a few ångströms (0.3-0.8 nm), much smaller than in a conventional capacitor.

Electrochemical pseudocapacitors use metal oxide or conducting polymer electrodes with a high amount of electrochemical pseudocapacitance additional to the double-layer capacitance. Pseudocapacitance is achieved by Faradaic electron charge-transfer with redox reactions, intercalation or electrosorption.

Hybrid capacitors, such as the lithium-ion capacitor, use electrodes with differing characteristics: one exhibiting mostly electrostatic capacitance and the other mostly electrochemical capacitance.

The electrolyte forms an ionic conductive connection between the two electrodes, which distinguishes them from conventional electrolytic capacitors where a dielectric layer always exists, and the so-called electrolyte, e.g. MnO₂ or conducting polymer, is in fact part of the second electrode, i.e. the cathode or positive electrode. Supercapacitors are polarized by design with asymmetric electrodes, or, for symmetric electrodes, by a potential applied during manufacture.

For example, the supercapacitor device has a capacitance value of more than 50 µF, in particular of 100 µF or more.

In some implementations the supercapacitor device is configured to be charged to a predefined charging voltage level in less than 10 seconds, in particular less than 5 seconds.

With the employment of such a supercapacitor device, the circuit may be configured to provide a current of up to 8 A or more at the output. In particular, this value may be a maximum value and smaller current values can still be provided during operation of the circuit.

The high charge reservoir of the supercapacitor device allows also driving of more than one optical emitter connected to the output. For example, the circuit is configured to concurrently drive more than 10, in particular more than 15 or even 20 optical emitters connected to the output.

Examples of optical emitters that can be connected to the output of the circuit include semiconductor diodes, laser diodes, surface emitting lasers such as vertical cavity surface emitting laser, VCSEL, or vertical external cavity surface emitting lasers, VECSEL, superluminescent diodes, SLEDs, and the like.

In one embodiment, the circuit is enclosed in a semiconductor package. In particular, the semiconductor package includes the control block and the single supercapacitor device. Due to the smaller size of the supercapacitor device compared to conventional capacitor banks, a smaller package size and a lighter weight can be achieved.

In addition, using a supercapacitor device allows faster charging and therefore high availability of the driver circuit without risking overheating of the circuit, its included components and the package.

Furthermore, current leakage is negligible with the supercapacitor device, such that energy is stored longer compared to conventional approaches.

The reduced number of components and/or the smaller package also result in lower costs of a circuit according to the improved concept. As a side effect, the circuit according to the improved concept can be easily controlled and allows simple application to illumination applications.

In some embodiments, the circuit further comprises at least one optical emitter connected to the output and enclosed in the semiconductor package. Hence, a compact illumination device can be manufactured. However, in various applications, the package with the circuit for driving and controlling the optical emitter and a package with the optical emitter are provided separately.

A semiconductor package is a metal, plastic, glass or ceramic casing containing one or more semiconductor electronic components. Individual discrete components are assembled in the package. The package provides protection against impact and corrosion, holds the contact pins or leads which are used to connect from external circuits to the device, and dissipates heat produced in the device.

In a further implementation of the improved concept, a camera module comprises a circuit according to one of the embodiments described above, at least one optical emitter connected to the output of the circuit, and an imaging sensor. Such an imaging sensor may include a sensor for providing color images but may also include time-of-flight, ToF, sensors for 2D and/or 3D ToF imaging.

In a further embodiment according to the improved concept, a mobile device comprises a camera module as described before, or a circuit according to one of the embodiments described before and at least one optical emitter connected to the output of the circuit.

The mobile device may be implemented as a mobile phone, a tablet computer, a photo camera, a video camera, a mobile sensing device or the like.

The improved concept will be described in more detail in the following with the aid of drawings. Elements having the same or similar function bear the same reference numerals throughout the drawings. Hence their description is not necessarily repeated in subsequent drawings.

In the drawings:
- Figure 1: shows an example implementation of a circuit according to the improved concept together with an optical emitter;
- Figure 2: shows an example implementation of a semiconductor package with an external optical emitter;
- Figure 3: shows an example implementation of a semiconductor package including an optical emitter; and
- Figure 4: shows an example implementation of a mobile phone.

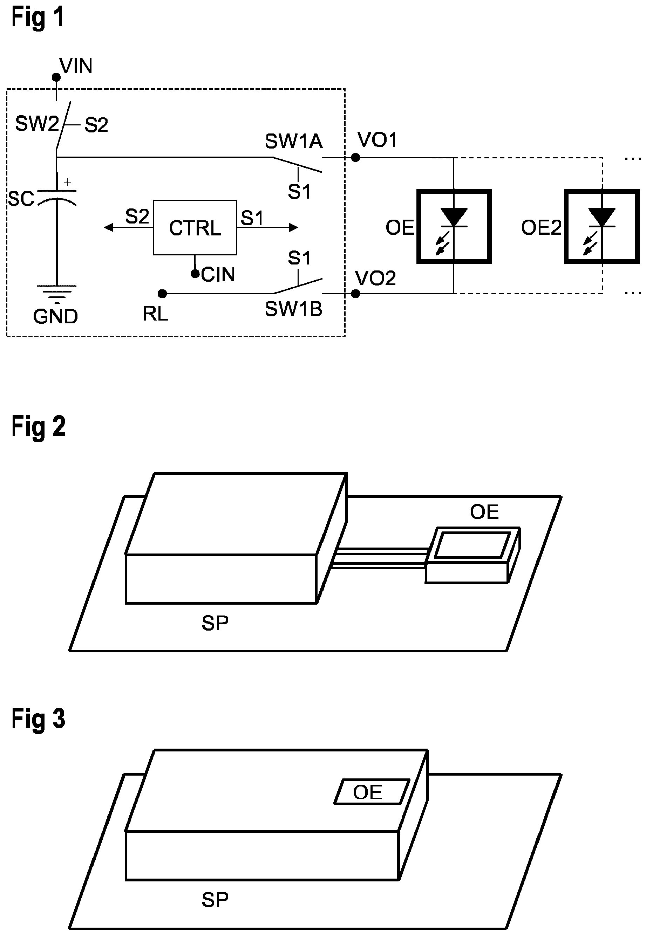

Figure 1 shows an example schematic diagram of a circuit for driving and controlling an optical emitter OE. The circuit comprises a supercapacitor device SC having its negative terminal connected to a ground connection GND. A positive terminal of the supercapacitor device SC is connected to a first, positive output terminal VO1 via a switch SW1A. The positive terminal is further connected to an input VIN via a second switch SW2. A second output terminal VO2 is connected to an internal reference line RL via a further switch SW1B.

The circuit further comprises a control block CTRL that provides a first control signal S1 and a second control signal S2 at its output. These control signals S1, S2 respectively control switches SW1A, SW1B and switch SW2. The control block CTRL further comprises a control input CIN for controlling the control block CTRL, for example for determining when and how the switching signals S1, S2 have to be applied.

At the output VO1, VO2 an optical emitter OE is connected. Optionally one or more further optical emitters OE2 can also be connected to the output VO1, VO2, indicated by the dashed connection lines.

During operation of the circuit, switches SW1A, SW1B are closed for providing power from the supercapacitor device SC to the optical emitter OE. It should be apparent to the skilled reader that one of the switches SW1A, SW1B could be left out while still leaving the possibility of providing power to the optical emitter OE in a switched fashion.

Similarly, also the switch SW2 could be omitted, for example if a supply voltage provided at the input VIN is controlled externally, e.g. switched on and off by an external voltage supply or power supply.

The supercapacitor device SC may be implemented as an electric double layer capacitor.

Electric double-layer capacitors, EDLC, are electrochemical capacitors in which energy storage predominantly is achieved by double-layer capacitance. Double-layer capacitors, together with pseudocapacitors, are part of a larger family of electrochemical capacitors called supercapacitors. They are also known as ultracapacitors. Supercapacitors do not have a conventional solid dielectric.

The capacitance value of a supercapacitor is determined by two storage principles:
Double-layer capacitance - electrostatic storage of the electrical energy achieved by separation of charge in a Helmholtz double layer at the interface between the surface of a conductor electrode and an electrolytic solution electrolyte. The separation of charge distance in a double-layer is on the order of a few Ångströms (0.3-0.8 nm) and is static in origin.

Pseudocapacitance - Electrochemical storage of the electrical energy, achieved by redox reactions electrosorption or intercalation on the surface of the electrode by specifically adsorbed ions that results in a reversible faradaic charge-transfer on the electrode.

Double-layer capacitance and pseudocapacitance both contribute inseparably to the total capacitance value of a supercapacitor. However, the ratio of the two can vary greatly, depending on the design of the electrodes and the composition of the electrolyte. Pseudocapacitance can increase the capacitance value by as much as a factor of ten over that of the double-layer by itself.

Supercapacitors can be divided into three family members, based on the design of the electrodes: Double-layer capacitors, pseudocapacitors and hybrid capacitors.

Double-layer capacitors are made with carbon electrodes or derivatives with much higher static double-layer capacitance than the faradaic pseudocapacitance.

Pseudocapacitors are formed with electrodes made of metal oxides or conducting polymers with much higher faradaic pseudocapacitance than the static double-layer capacitance.

Hybrid capacitors are capacitors with special electrodes that exhibit both significant double-layer capacitance and pseudocapacitance, such as lithium-ion capacitors.

However, double-layer capacitance and pseudocapacitance both contribute inseparably to the total capacitance value of an electrochemical capacitor.

The optical emitter OE, OE2 may be an SLED or a laser diode, such as a VCSEL or VECSEL. These types of lasers are configured to emit light at a specified wavelength, e.g. in the UV, visual or infrared, IR, part of the electromagnetic spectrum. In some embodiments the optical emitter OE, OE2 is tunable to emit at a specified wavelength. The specified emission wavelength, or an emission spectrum, lies in the IR or UV/vis. For example, VCSEL or VECSEL predominantly emit in the IR, e.g. at 940 nm.

While in the example of Figure 1 only one additional, optional optical emitter OE2 is shown, even a larger number of optical emitters can be connected to the output VO1, VO2. For example, the circuit may be configured to concurrently drive more than 10, in particular more than 15 or up to 20 optical emitters connected to the output VO1, VO2. This is possible as the circuit may be configured to provide a current of up to 8 A or more at the output VO1, VO2.

Figure 2 shows an example implementation where the circuit of Figure 1, or an embodiment thereof, is enclosed in a semiconductor package SP having connected to its output an optical emitter OE in a separate package. Both the semiconductor package SP and the package of the optical emitter OE are, for example, placed on a common carrier plate.

Figure 3 shows a similar implementation, in which the optical emitter OE is included in the semiconductor package SP of the circuit, thus providing a single fully functional optical emitter package including driver and control.

In both examples of Figure 2 and Figure 3 only one optical emitter OE is shown. However, as mentioned before, also a greater number of optical emitters can be provided.

Referring again to Figure 3, if an additional imaging sensor is included into the semiconductor package SP, such a package could be used a camera module.

In some example implementations, the circuit includes a supercapacitor device SC configured for a nominal voltage of 9 V and having a capacitance of 0.1 mF. Such parameters implemented as a supercapacitor allow small dimensions of the corresponding semiconductor package, which can be used, in present and future mobile devices having limited space available.

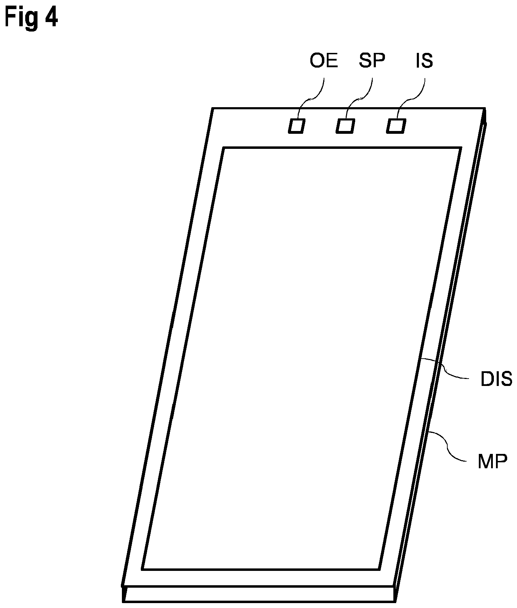

Referring now to Figure 4, an example of a mobile phone MP is shown employing the improved concept. The mobile phone MP stands as an example for other mobile devices like tablet computers, photo cameras, video cameras or mobile sensing devices.

For example, the mobile phone MP includes the semiconductor package SP with the circuit for driving and controlling an optical emitter OE. The mobile phone further comprises an imaging sensor IS and a display DIS.

## Claims

1. A circuit for driving and controlling an optical emitter (OE, OE2), the circuit comprising:
- an input (VIN) for receiving a supply voltage;
- an output (VO1, VO2) for connecting the optical emitter (OE, OE2);
- a single supercapacitor device (SC); and
- a control block (CTRL) that is configured to provide power from the supercapacitor device (SC) to the output (VO1, VO2) depending on a first control signal (S1), and to charge the supercapacitor device (SC) from the supply voltage depending on a second control signal (S2).

2. The circuit of claim 1, wherein the supercapacitor device (SC) is implemented as an Electric Double Layer Capacitor.

3. The circuit of claim 1 or 2, wherein the supercapacitor device (SC) has a capacitance value of more than 50 µF, in particular more than 100 µF.

4. The circuit of one of claims 1 to 3, wherein the supercapacitor device (SC) is configured to be charged to a predefined charging voltage level in less than 10s, in particular less than 5s.

5. The circuit of one of claims 1 to 4, wherein the optical emitter (OE, OE2) comprises at least one of the following:
- a semiconductor diode;
- a laser diode;
- a vertical-cavity surface-emitting laser, VCSEL;
- a vertical-external-cavity surface-emitting-laser, VECSEL;
- a superluminescent diode, SLED;
- a surface emitting laser.

6. The circuit of one of claims 1 to 5, which is configured to provide a current of up to 8 A or more at the output (VO1, VO2) .

7. The circuit of one of claims 1 to 6, which is configured to concurrently drive more than 10, in particular more than 15 optical emitters connected to the output (VO1, VO2).

8. The circuit of one of claims 1 to 7, wherein the circuit is enclosed in a semiconductor package (SP).

9. The circuit of claim 8, further comprising at least one optical emitter (OE, OE2) connected to the output (VO1, VO2) and enclosed in the semiconductor package (SP).

10. A camera module comprising a circuit according to one of claims 1 to 9, at least one optical emitter (OE, OE2) connected to the output (VO1, VO2) of the circuit, and an imaging sensor (IS).

11. A mobile device comprising a camera module according to claim 10 or a circuit according to one of claims 1 to 9 and at least one optical emitter (OE, OE2) connected to the output (VO1, VO2) of the circuit.

12. The mobile device of claim 11, which is implemented as one of the following: a mobile phone, a tablet computer, a photo camera, a video camera, a mobile sensing device.
